# FASCICULE DE BREVET EUROPEEN

(11) **EP 2 197 568 B1**
(45) Date de publication et mention de la délivrance du brevet: **20.07.2011**
(21) Numéro de dépôt: 08842824.8
(22) Date de dépôt: 02.10.2008
(51) Int. Cl.: B01D 53/94

(54) **STRUCTURE DE PURIFICATION INCORPORANT UN SYSTEME DE CATALYSE ELECTROCHIMIQUE POLARISE**
REINIGUNGSSTRUKTUR MIT EINEM VORGESPANNTEN ELEKTROCHEMISCHEN KATALYSATORSYSTEM
PURIFICATION STRUCTURE INCORPORATING A BIASED ELECTROCHEMICAL CATALYST SYSTEM

(30) Priorité: 08.10.2007 FR 0758153
(43) Date de publication de la demande: 23.06.2010
(73) Titulaire: SAINT-GOBAIN CENTRE DE RECHERCHES ET D'ETUDES EUROPEEN, 92400 Courbevoie (FR)
(72) Inventeur: VERNOUX, Philippe, F-69270 Rochetaillee sur Saone (FR); HADJAR, Abdelkader, F-69008 Lyon (FR); MAROUF, Ahmed, F-84300 Cavaillon (FR)
(74) Mandataire: Lucas, Francois
(86) Numéro de dépôt international: PCT/FR2008/051790
(87) Numéro de publication internationale: WO 2009/053589

(56) Documents cités:
- FR-A- 2 899 493
- JP-A- 2001 145 820
- US-B1- 6 878 354

## Description

La présente invention se rapporte au domaine des structures de purification d'un gaz chargé en polluants gazeux essentiellement du type NOₓ. Plus particulièrement, l'invention se rapporte aux structures en nid d'abeille, notamment utilisées pour traiter les gaz d'échappement d'un moteur essence ou de préférence diesel, et incorporant un système combinant un catalyseur A de réduction desdites espèces polluantes du type NOₓ et un catalyseur B d'oxydation d'hydrocarbures HC et/ou d'oxydation des suies et/ou de réactions de vaporéformage du type HC+H₂O → 3/2H₂ + CO et/ou de réactions des gaz à l'eau du type CO+H₂O → H₂ + CO₂.

Les techniques et les problèmes liés à la purification des gaz pollués, notamment en sortie des lignes d'échappement des véhicules automobiles essence ou diesel sont bien connus de l'art. Un catalyseur conventionnel trois voies permet le traitement conjoint des polluants> NOₓ, CO et HC et leur conversion en des gaz neutres et chimiquement non nocifs tels que N₂, CO₂ et H₂O. Une très bonne efficacité du système n'est cependant atteinte que par un réglage continuel de la richesse du mélange aircarburant. Il est ainsi connu que le moindre écart par rapport à la stoechiométrie du mélange provoque une forte augmentation des émissions des polluants.

Pour résoudre ce problème, il a été proposé d'incorporer au catalyseur des matériaux permettant temporairement de fixer les NOₓ (souvent appelés dans le métier NOₓ trap) lorsque le mélange est pauvre (c'est à dire sous stoechiométrique). L'inconvénient majeur d'un tel système est cependant que la réduction des NOx ne peut être réalisée qu'au prix d'une surconsommation de carburant, lors d'une phase ultérieure de fonctionnement en mélange riche. La désorption des NOx piégés sur le catalyseur et leur réduction catalytique en azote gazeux N₂ ne peuvent en effet être obtenues qu'en présence, au niveau du catalyseur de réduction, d'une quantité suffisante des espèces réductrices, sous la forme d'hydrocarbures ou de monoxyde de carbone CO ou encore d'hydrogène H₂, l'hydrogène pouvant être lui-même obtenu par une réaction catalytique entre les hydrocarbures HC et la vapeur d'eau ou entre le CO et la vapeur d'eau.

Le document US 6878354 B1 décrit un dispositif pour la purification de gaz d'échappement, comprenant des particules de catalyseurs d'oxydation et de réduction reliés entre eux par un conducteur électronique et un conducteur ionique.

A l'heure actuelle, aucun système n'est connu qui permet une conversion substantielle des NOₓ en N₂ dans une atmosphère pauvre, c'est à dire en présence d'un excès d'oxygène. L'un des buts de la présente invention est justement de fournir un tel système, permettant notamment la conversion d'une quantité substantielle des NOx même lorsque le rapport air/carburant des gaz d'échappement est pauvre.

Selon une approche différente, le brevet US 6,878,354 décrit une combinaison de catalyseurs d'oxydation des HC et CO et de réduction des NOₓ par voie électrochimique. De tels systèmes apparaissent avantageux car ils permettent une réaction électrochimique entre deux catalyseurs de réduction A et d'oxydation B reliés entre eux à la fois par un conducteur électronique C et un conducteur ionique D. Selon cette publication, un tel système permet notamment d'augmenter la conversion catalytique des espèces polluantes notamment dans un fonctionnement d'un moteur en mélange pauvre.

Selon les auteurs, la présence d'un tel système comprenant un conducteur ionique et un conducteur électronique permet simultanément l'oxydation des espèces réductrices du type HC, CO, suies ou H₂ et la réduction des espèces oxydantes du type NOₓ selon le principe général illustré par la figure 1 de ce brevet.

Cependant, l'efficacité d'un tel système apparaît limité car sa bonne mise en oeuvre nécessite un contact étroit entre les quatre éléments constituant le système électrochimique. Ainsi, dans les modes de réalisation décrits dans le brevet US 6,878,354, les catalyseurs A et B sont déposés sous la forme de particules sur le monolithe. L'efficacité d'un tel système dépend alors fortement des conditions de dépôt des catalyseurs A et B et des conducteurs électroniques C et ioniques D. En effet, les propriétés obtenues sont fortement dépendantes de la dispersion des différentes phases correspondant aux différents constituants sur le support utilisé, une connexion étant nécessaire entre ces quatre éléments pour le bon fonctionnement du système électrochimique.

En outre, l'efficacité de la conversion des espèces polluantes peut également être substantiellement limitée par les caractéristiques intrinsèques des matériaux utilisés comme conducteur ionique et électronique. Plus précisément, le système électrochimique étant constitué de grains de petite taille aléatoirement disposés les uns par rapport aux autres, son efficacité est nécessairement limitée d'une part par les connections entre les grains et d'autre part par la faible quantité de conducteurs (électrons et/ou ions) disponibles pour le bon fonctionnement du système de catalyse électrochimique.

Le but de la présente invention est de fournir une solution permettant de résoudre les problèmes précédemment décrits. En particulier, un des buts de la présente invention est de fournir une structure pour la purification d'un gaz pollué, en particulier une structure de filtration d'un gaz d'échappement issu d'un moteur essence ou de préférence diesel chargé en polluants gazeux et en particules solides, susceptible de fonctionner efficacement quelle que soit la richesse du mélange air/carburant.

La présente invention se rapporte dans sa forme la plus générale à un dispositif pour la purification d'un gaz pollué, par exemple un gaz d'échappement d'un moteur diesel ou essence, comprenant en combinaison une structure en nid d'abeille, comprenant au moins un matériau conducteur électronique poreux formant les parois de ladite structure et un système électrochimique de traitement dudit gaz comprenant une couche d'un matériau D conducteur ionique et isolant électronique, un catalyseur A de réduction des espèces polluantes du type NOₓ, un catalyseur B d'oxydation des espèces polluantes du type suies, hydrocarbures HC, CO ou H₂, ledit système électrochimique étant configuré sous la forme d'une électrode W et d'une contre électrode CE, et des moyens d'application d'une tension ou d'un courant entre ladite électrode W et ladite contre-électrode CE.

Plus précisément, l'invention se rapporte à un dispositif pour la purification d'un gaz pollué, par exemple un gaz d'échappement d'un moteur diesel ou essence, comprenant en combinaison :
- une structure en nid d'abeille, comprenant au moins un matériau conducteur électronique poreux formant les parois de ladite structure et un système électrochimique de traitement dudit gaz comprenant:
- une couche d'un matériau D conducteur ionique et isolant électronique,
- un catalyseur A de réduction des espèces polluantes du type NOₓ, au contact du conducteur ionique D, formant tout ou partie d'une électrode W ou relié électriquement à une électrode W et,
- un catalyseur B d'oxydation des espèces polluantes du type suies, hydrocarbures HC, CO ou H₂, au contact du conducteur ionique D, formant tout ou partie d'une contre-électrode CE ou relié électriquement à une contre-électrode CE,
   le catalyseur B étant disposé au contact du matériau conducteur électronique formant les parois du nid d'abeille et ladite couche de conducteur ionique D étant disposée entre le catalyseur A et le catalyseur B de manière à les isoler électroniquement,
- des moyens d'application d'une tension ou d'un courant entre ladite électrode W et ladite contre-électrode CE.

Préférentiellement, le matériau conducteur électronique formant les parois (1) du nid d'abeille est un matériau inorganique poreux conducteur électronique et dans lequel le gaz à purifier traverse lesdites parois poreuses.

Selon un mode de réalisation possible de l'invention, des bouchons obstruent à une de leur extrémité les canaux formés entre les parois des canaux de la structure en nid d'abeille, de manière à délimiter alternativement des canaux d'entrée et des canaux de sortie pour le gaz à purifier, lesdits bouchons étant formés dans un matériau conducteur électronique et en contact électronique avec les catalyseurs A ou B, l'électrode W du système électrochimique comprenant l'ensemble des bouchons disposés en entrée de la structure et la contre électrode CE du système électrochimique comprenant l'ensemble des bouchons disposés en sortie de la structure.

Par exemple, le catalyseur B d'oxydation est déposé dans la porosité du matériau inorganique poreux.

Typiquement, la densité de courant appliquée entre l'électrode et la contre électrode est supérieure à 0,01 mA/cm².

Le conducteur ionique est un conducteur ionique par ions O²⁻ ou par ions H⁺.

Par exemple, le matériau D est conducteur par ion oxygène du type structure fluorite par exemple, zircone stabilisée par CaO ou par Y203, oxydes mixtes de gadolinium et cérium, ou de structure pérovskite du type gallate, composés à base de Lanthane, par exemple LaAlO₃ ou LaGaO₃ ou La₁₋ₓsrₓGa1_{-y}Mg_{y}O₃ ou de structure bimevox, par exemple Bi₂V₁₋ₓMeₓO_{z} ou de structure lamox, par exemple La₂Mo₂O₉ ou de structure apatite, par exemple Me₁₀(XO₄)₆Y₂.

Le matériau D peut aussi être un conducteur protonique du type pérovskite, par exemple SrCe₁₋ₓMₓO_{3-α} où M est une terre rare, par exemple le composé SrCeₓYb₁₋ₓO_{3-α} ou du type BaCe₁₋ₓMₓO_{3-α}, par exemple le composé BaCeO₃, ou encore un composé de la famille LaₓSr₁₋ₓSCO_{3-α}, par exemple La₀,₉Sr_{0,1}ScO_{3-α}.

Le matériau inorganique poreux peut comprendre ou être constitué par un matériau inorganique conducteur électronique du type carbure, par exemple le SiC, ou du type siliciure, par exemple MoSi₂ ou borure, par exemple TiB₂, ou de la famille La₁₋ₓSrₓMnO₃ ou du type oxydes mixtes de gadolinium et cérium CGO.

Au sens de la présente description, le matériau inorganique poreux présente une porosité ouverte, mesurée classiquement par porosimétrie au mercure, supérieure à 10%, de préférence supérieure à 20%, voire supérieure à 30%. Une porosité trop faible du matériau constituant les parois filtrantes conduit à une perte de charge trop élevée. Une porosité trop élevée du matériau constituant les parois filtrantes conduit à une efficacité de filtration insuffisante.

Selon un mode possible, le matériau inorganique poreux est à base de carbure de silicium SiC, de préférence recristallisé à une température comprise entre 2100 et 2400°C. En particulier, le matériau inorganique peut être à base de SiC dopé, par exemple par de l'aluminium ou de l'azote, et de telle façon que sa résistivité électronique soit inférieure de préférence à 20 Ohm.cm à 400°C, de préférence encore à 15 Ohm.cm à 400°C, de manière plus préférée à 10 Ohm.cm à 400°C. Par l'expression « à base de SiC », on entend au sens de la présente description que le matériau est constitué d'au moins 25% poids, de préférence d'au moins 45% poids et de manière très préférée d'au moins 70% poids de SiC.

Le catalyseur A de réduction comprend le plus souvent au moins un métal précieux choisi parmi Pt, Pd ou Rh ou Ag ou les métaux de transition, notamment Cu, Fe, Ni, Co, et au moins un métal ou un oxyde métallique du groupe des alcalins, des alcalino-terreux, des terres rares ou des métaux de transition. Le catalyseur A utilisé pour la réaction de réduction est par exemple choisi parmi les catalyseurs bien connus de l'art pour leur activité et de préférence leur sélectivité vis-à-vis des réactions de réduction des NOx. Ils peuvent notamment être choisis parmi les composés comprenant des métaux alcalins ou alcalino-terreux ou des terres rares, qui jouent en particulier le rôle de piège à NOₓ, par exemple tels que décrits dans la demande EP 1 566 214, déposés en mélange avec un principe actif incluant des métaux précieux Pt, Pd, Rh, ou Ag ou des métaux de transition, notamment Cu, Fe, Ni, Co, selon toute technique connue.

Le catalyseur B d'oxydation comprend le plus souvent au moins un métal précieux choisi parmi Pt, Pd ou Rh ou les métaux de transition notamment Cu, Fe, Ni, Co. Le catalyseur B utilisé pour la réaction d'oxydation des hydrocarbures est choisi parmi les catalyseurs bien connus de l'art pour leur activité et de préférence leur sélectivité vis-à-vis des réactions d'oxydation des hydrocarbures. En particulier, les catalyseurs de reformage et de vaporeformage utilisés dans le domaine de la pétrochimie et du raffinage peuvent être utilisés selon l'invention. Ceux déposés en mélange avec un principe actif incluant des métaux précieux Pt, Pd, Rh, ou des métaux de transition, notamment Cu, Fe, Ni, Co, peuvent être utilisés.

La présente invention trouve tout particulièrement son application dans les structures utilisées pour la purification et la filtration d'un gaz d'échappement d'un moteur diesel. De telles structures, généralement désignées sous le terme filtres à particules, comprennent au moins un et de préférence une pluralité de blocs monolithiques en nid d'abeille. A la différence des dispositifs de purification précédemment décrits, dans de tels filtres, le ou lesdits blocs comprenant un ensemble de conduits ou canaux adjacents d'axes parallèles entre eux séparés par des parois poreuses, obturés par des bouchons à l'une ou l'autre de leurs extrémités pour délimiter des conduits d'entrée s'ouvrant suivant une face d'admission des gaz et des conduits de sortie s'ouvrant suivant une face d'évacuation des gaz, de telle façon que le gaz traverse les parois poreuses. Des exemples de telles structures assemblées ou non assemblées sont par exemple décrites dans les publications EP 0816065, EP 1142619, EP1306358 ou encore EP 1591430.

Dans de telles structures filtrantes, les gaz sont forcés de traverser les parois. Les travaux menés par la demanderesse ont montré que l'utilisation d'un système de catalyseur électrochimique tel que précédemment décrit permet de façon surprenante d'une part une très bonne conversion des espèces polluantes sans pour autant augmenter sensiblement la perte de charge engendrée par l'introduction du filtre sur la ligne d'échappement.
Enfin, l'invention se rapporte à l'utilisation d'un dispositif selon l'une des réalisations précédentes pour la mise en oeuvre d'un contrôle embarqué de l'activité catalytique du catalyseur, notamment pour estimer l'efficacité du catalyseur, ou dans le choix du seuil de déclenchement ou d'arrêt d'une phase de régénération dudit dispositif.

Le dispositif selon l'invention, tel qu'il vient d'être décrit, contribue en outre à améliorer l'efficacité de régénération du filtre en favorisant un taux d'oxydation plus important des suies.

Dans un mode de réalisation préféré de l'invention qui n'est cependant pas limitatif, le corps filtrant selon l'invention est ainsi essentiellement constitué d'une matrice en carbure de silicium poreux éventuellement dopé qui constitue les parois d'une structure filtrante en nid d'abeille. Selon une première étape, le catalyseur B d'oxydation est déposé par exemple par imprégnation dans la porosité des parois du corps filtrant. Selon l'invention, le catalyseur B est déposé dans des proportions et des conditions permettant de préférence la percolation entre elles des particules le constituant, sous la forme d'un film ou d'un réseau conducteur électronique. Sans sortir du cadre de l'invention les particules peuvent être déposées sur un support de catalyseur constitué d'un matériau conducteur électronique.

Selon une seconde étape, le matériau conducteur ionique D est ensuite déposé sur la surface des parois de SiC imprégnés et recouvertes par le catalyseur B en une couche dont l'épaisseur est de préférence ajustée pour rester perméable aux gaz d'échappement traversant la paroi du filtre et pour conduire à un réseau conducteur ionique percolant.

Selon une troisième étape, le deuxième catalyseur A de réduction est ensuite déposé sur la couche du matériau conducteur ionique par exemple selon les techniques classiques d'imprégnation, de telle façon que la couche de matériau D isole électriquement les deux catalyseurs. Selon l'invention, tout comme le catalyseur B, le catalyseur A est déposé dans des proportions et des conditions permettant la percolation des particules le constituant, sous la forme d'un film ou d'un réseau conducteur électronique.

Une mise en oeuvre complète du procédé d'obtention d'un filtre selon l'invention est illustrée dans la suite de la description, en connexion avec les figures annexées parmi lesquelles :
La figure 1 est une représentation schématique en coupe d'un morceau de paroi d'un filtre catalytique tel que précédemment décrit (étape 1), incorporant dans sa porosité un premier catalyseur d'oxydation ou de réduction.
La figure 2 est une représentation schématique en coupe d'un morceau de paroi d'un filtre catalytique obtenu selon l'invention (étape 2), incorporant dans sa porosité un premier catalyseur d'oxydation B recouvert par une couche d'un matériau conducteur ionique D.
La figure 3 est une représentation schématique en coupe d'un morceau de paroi d'un filtre catalytique obtenu selon l'invention (étape 3), incorporant dans sa porosité le catalyseur d'oxydation A recouvert par une couche d'un matériau conducteur ionique formant une isolation électrique entre le catalyseur A et un catalyseur de réduction B.
La figure 4 est une représentation schématique en coupe d'un morceau de paroi d'un filtre catalytique obtenu selon l'invention, dans lequel les canaux d'entrée sont obstrués par des bouchons.
Sur la figure 5, on a représenté une vue en élévation des faces d'entrée 5a et de sortie 5b du système de filtration selon l'invention.
La figure 6 illustre le dispositif expérimental utilisé pour démonter l'efficacité du filtre selon l'invention (voir les exemples qui suivent).

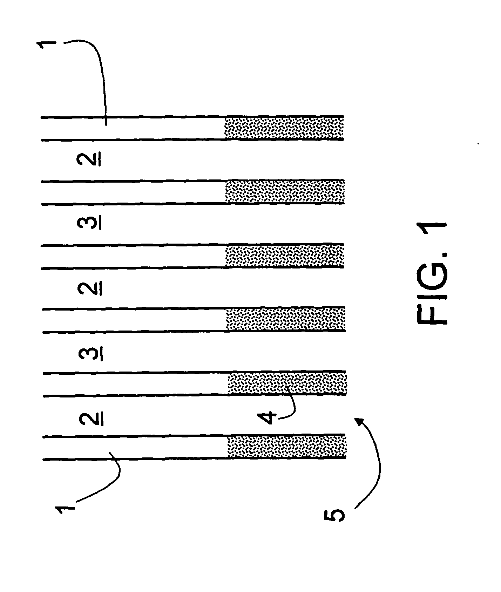

Dans le mode de réalisation représenté sur la figure 1, on a schématisé, à partir de la face avant 5 d'entrée des gaz, une vue en coupe longitudinale des parois 1 parallèles d'un filtre à particule classique en nid d'abeille par exemple tel que décrit dans les demandes EP 816065 ou EP 1142619.

Le matériau constitutif des parois 1 du filtre est constitué d'un matériau conducteur électronique, par exemple du SiC dopé par de l'aluminium Al, dont la porosité mercure est typiquement proche de 45%. Le filtre comprend alternativement des canaux d'entrée 3 et des canaux de sortie 2, suivant la position des bouchons.

Dans la structure en nid d'abeille non encore bouchée telle que représentée sur la figure 1, est déposée par un procédé sol-gel et selon des méthodes bien connues, le catalyseur B, sous la forme de particules nanométriques de métal de Rh. Ces particules se retrouvent ainsi dispersées sur le SiC conducteur électronique, à l'intérieur des parois 1 des canaux 2, 3. L'imprégnation peut être réalisée uniquement dans la partie inférieure du filtre, par exemple sur le premier tiers 4 de la longueur des canaux à partir de la face avant 5 d'entrée des gaz. Bien entendu, l'imprégnation peut sans sortir du cadre de l'invention concerner une partie plus ou moins importante des parois 1, notamment afin de limiter les pertes de charges liées à la présence du système catalytique selon l'invention et conserver pleinement à la structure son rôle de filtration.

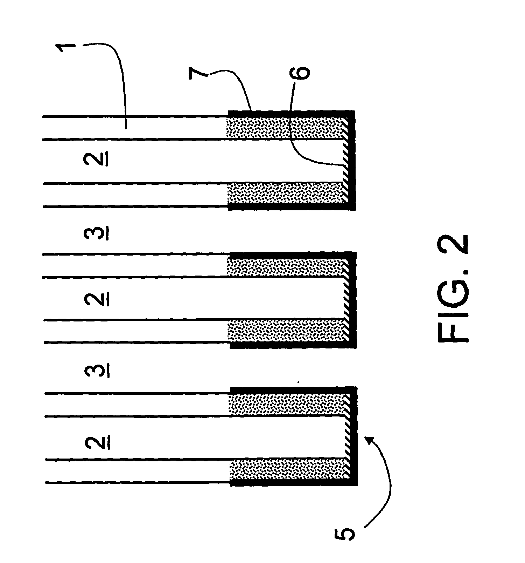

Tel que représenté sur la figure 1, l'imprégnation par la solution catalytique est effectuée dans des conditions permettant la diffusion de la solution catalytique dans toute l'épaisseur des parois 1. On ne sortirait cependant pas de l'invention si seule la partie la plus externe des parois était imprégnée. En général, l'épaisseur imprégnée des parois 1 est cependant au moins de l'ordre de 500 nm. Après cette première imprégnation par le catalyseur B, les canaux d'entrée 2 de la face avant 5 de la structure en nid d'abeille du filtre non bouché sont masqués avec une résine ou une cire 6 pouvant être éliminée par une simple chauffage à une température typiquement inférieure ou égale à 300°C, de façon à ne pas détériorer la couche de catalyseur déjà présente, selon des techniques de masquage bien connues de l'homme de l'art. La structure est ensuite séchée.
Tel qu'illustré sur la figure 2, un dépôt par voie sol-gel d'un conducteur ionique D est ensuite réalisé.
Selon un exemple de réalisation, la solution sol-gel initiale employée pour le dépôt est obtenue par mélange des nitrates d'Yttrium Y(NO₃)(H₂O)₆ et de Zirconium ZrO(NO₃)₂(H₂O)₆ dans des proportions respectives correspondant à une quantité molaire de 8% de Y₂O₃ dans la couche de zircone yttriée 7 finalement obtenue. Selon l'invention, la couche déposée peut déborder au-delà de la partie 4 des parois imprégnée par le catalyseur B. La porosité de cette couche conductrice ionique 7 est choisie pour être suffisamment faible pour assurer une bonne conduction ionique. En outre l'épaisseur de la couche conductrice ionique 7 est également suffisamment faible et poreuse pour permettre sa traversée par les gaz d'échappement, en fonctionnement.

Les masques de résine 6 sont ensuite éliminés et la couche de conducteur ionique est maturée par un traitement thermique sous air à 300°C. Le traitement permet de dégager les canaux d'entrée 2. Il peut être nécessaire de meuler finement la surface de ces canaux pour finir d'éliminer les résidus de résine.
Après l'élimination du masque, le filtre est de nouveau imprégné dans la solution sol-gel du conducteur ionique D de façon à ne recouvrir que l'extrémité inférieure 8 des canaux, par exemple sur une hauteur de l'ordre d'environ 1mm.

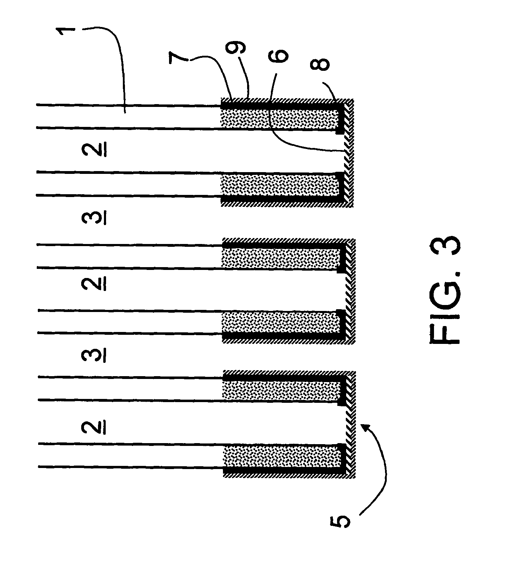

Tel que représenté sur la figure 3, les canaux d'entrée 2 sont ensuite de nouveau masqués au niveau de la face avant 5 du filtre, avec la même résine 6 que décrite précédemment.
Une solution de catalyseur A est préparée à partir de sels de Baryum et de Pt. Selon des techniques bien connues, la solution est maturée sous la forme d'un sol gel de catalyseur A puis le filtre est imprégné de cette solution par simple immersion comme précédemment sous la forme d'un film ou d'une couche 9 disposée à la surface ou dans la porosité de la couche conductrice ionique 7.
Les masques de résine 6 sont ensuite éliminés par un traitement thermique sous air à 300°C. Le traitement permet de dégager les canaux d'entrée 2. Il peut être nécessaire de meuler finement la surface de ces canaux pour finir d'éliminer les résidus de résine.

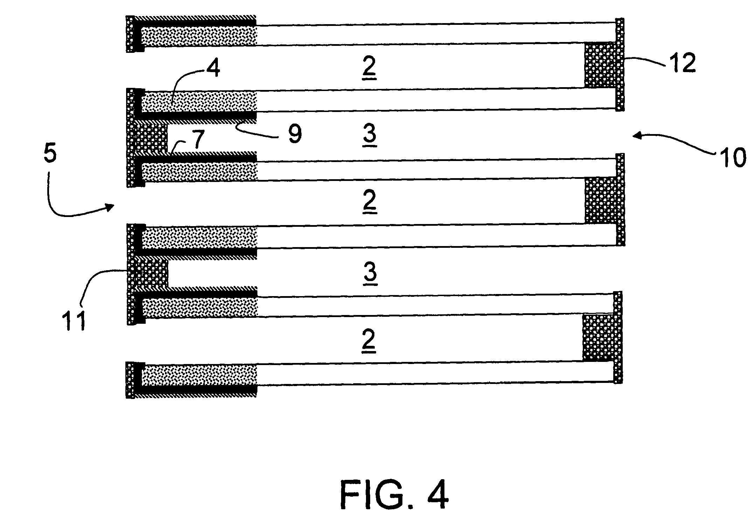

Selon les techniques classiques, les canaux d'entrées sont ensuite masqués avec une résine ou un papier adapté, selon des techniques bien connues dans le métier. En face avant 5 du filtre, les canaux de sortie 3 du filtre, non masqués par la résine ou le papier, sont ensuite obturés par des bouchons 11 conducteurs électroniques, tel qu'illustré par la figure 4. Les bouchons 11 sont classiquement obtenus par l'application à l'extrémité des canaux de sortie 3 d'une barbotine à base de SiC suivi d'un traitement thermique de solidification à 500°C.
Selon la même méthode déjà utilisée pour les bouchons d'entrée, en face arrière 10 du filtre, les canaux d'entrée sont ensuite obturés par des bouchons 12 conducteurs électroniques.
Le procédé ainsi utilisé conduit alors à un filtre illustré de façon schématique par la figure 4.

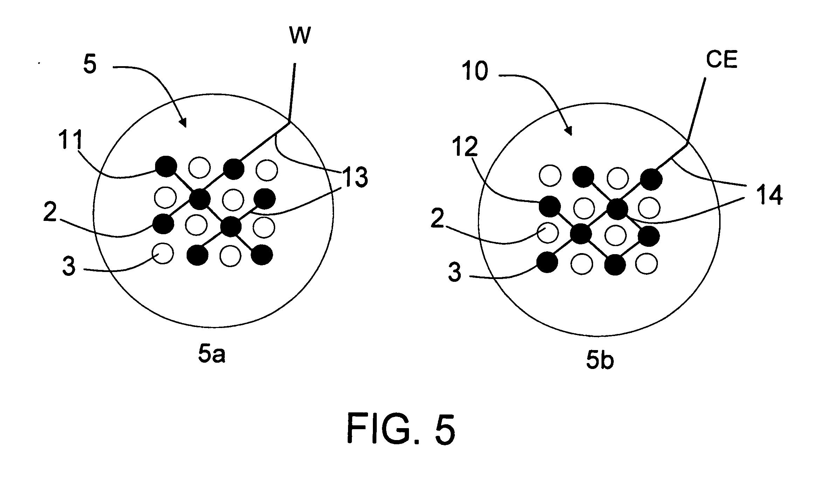

Sur la figure 5, on a représenté une vue en élévation des faces d'entrée 5a et de sortie 5b d'un système de filtration selon l'invention élaboré à partir du filtre représenté sur la figure 4.
Tel qu'illustré sur la figure 5 et décrit précédemment, les bouchons 11 obstruant les canaux de sortie 3 sur la face d'entrée (figure 5a) et 12 obstruant les canaux d'entrée 2 sur la face sortie (figure 5b) sont constitués de SiC conducteur.
Sur la face d'entrée, tous les bouchons 11, disposés au contact des particules de catalyseur A, sont reliés entre eux par des fils métalliques 13 au sein d'une électrode de travail W. L'électrode de travail W ainsi obtenue est schématisée par les figures 4 et 5a.
Le catalyseur B est disposé à la surface et/ou dans les parois 1 sous la forme d'une couche présente sur une longueur de paroi 4. Les particules du catalyseur B sont ainsi au contact des parois en SiC conducteur électronique du monolithe mais isolés électroniquement des particules de catalyseur A par la couche conductrice ionique 7.
Tous les bouchons 12 conducteurs par électrons de la face de sortie du filtre (figure 5b) sont reliés entre eux par des fils métalliques 14 au sein d'une contre-électrode CE. La contre-électrode CE est ainsi obtenue par la mise en contact électronique de toutes les couches ou films de catalyseurs B, par l'intermédiaire des parois et des bouchons en SiC conducteur électronique.

Typiquement, l'application d'une différence de potentiel négative entre W et CE aura pour effet de provoquer la migration des ions oxydes contenus dans la couche conductrice ionique du catalyseur A vers le catalyseur B et favorisera ainsi simultanément, au sein de la structure de filtration, la réduction des espèces oxydantes et l'oxydation des espèces réductrices présentes dans les gaz d'échappement.

En fonctionnement, les gaz de combustion issus du moteur entrent dans la structure filtrante par les canaux d'entrée 2 et sont directement au contact de la couche 4 du catalyseur d'oxydation B qui permet l'élimination des polluants du type suies, HC, CO etc. Les gaz traversent ensuite les parois poreuses 1 et arrivent alors directement au contact de la couche 9 du catalyseur de réduction A des espèces polluantes du type NOₓ. Les gaz, sensiblement débarrassés de leurs polluants, sont ensuite évacués par les canaux de sortie 3.

L'invention n'est cependant pas limitée au mode de réalisation tel que précédemment décrit mais doit être comprise comme se rapportant à toute structure filtrante catalysée, comprenant au moins un catalyseur d'oxydation et un catalyseur de réduction et polarisée selon le principe précédant. Les structures de filtration selon l'invention comprennent de canaux d'entrée et des canaux de sortie adjacents délimitées par des parois poreuses dont les extrémités sont alternativement bouchées d'un coté puis de l'autre, selon la technologie classique des filtres à particules pour moteur à combustion interne.

Selon une caractéristique essentielle de l'invention, le filtre catalysé est polarisé par l'application d'un courant électrique ou d'une tension typiquement à partir d'un générateur électrique, de telle façon que la densité de courant appliquée entre l'électrode et la contre électrode est supérieure à 0,01 mA/cm², de préférence supérieure à 0,05 mA/cm² et typiquement comprise entre 0,01 et 10 mA/cm². La surface prise en compte est la somme des surfaces spécifiques du dépôt A et du dépôt B.

L'invention concerne également une ligne d'échappement incorporant le dispositif de dépollution de gaz de combustion d'un moteur de préférence Diesel équipé tel que décrit précédemment. Le dispositif peut comprendre notamment un système de mise sous tension de 0 à 10 Volt en valeur absolue commandé par un système de régulation, notamment en fonction du régime moteur et/ou éventuellement d'autres données caractéristiques du fonctionnement du moteur et/ou de la ligne d'échappement.

Le dispositif selon l'invention peut également comprendre des moyens supplémentaires autorisant la mise en oeuvre d'un contrôle embarqué de l'activité catalytique du catalyseur. Selon une réalisation possible, le contrôle peut consister simplement par l'arrêt de la polarisation et la mesure de la différence de potentiel subsistante entre l'électrode de travail W et la contre électrode CE. A partir de valeurs de référence, typiquement établies sur la base de cellules modèles, correspondant à la différence de potentiel mesuré hors tension, on peut estimer de manière simple et rapide l'efficacité du catalyseur et appliquer le cas échéant une correction de la polarisation électrique nécessaire.

Selon une autre réalisation possible, la mesure de la différence de potentiel hors tension peut induire ou participer parmi d'autres paramètres (perte de charge, poids du filtre, etc.) dans le choix du seuil de déclenchement ou d'arrêt d'une phase de régénération.

Le système électrochimique selon la présente invention est adapté non seulement à la réduction des NOₓ couplée à l'oxydation des suies (particules solides) présentes dans les parois du filtre à particules, mais également à une réduction des NOₓ couplée à l'oxydation des espèces réductrices gazeuses contenus dans le gaz d'échappement tels que les hydrocarbures imbrûlés et/ou le monoxyde de carbone.

Le système électrochimique selon la présente invention présente de nombreux avantages :
- les électrons nécessaires à la réaction de réduction des NOₓ ainsi que les anions nécessaires à la réaction d'oxydation de HC et/ou CO et/ou des suies sont avantageusement directement fournis par le support, ce qui permet d'assurer le fonctionnement du système électrochimique avec une quantité d'espèces conductrices quasiment constante et non limitée par la taille du ou des électrolytes solides,
- le fonctionnement du système de catalyse électrochimique est améliorée puisque la totalité des particules de catalyseurs A et B sont actives : le système électrochimique est actif quelle que soit la disposition relative des particules A et B dans la porosité du matériau constituant les parois.

Dans le mode illustré par les figures 1 à 5, la conduction ionique est assurée par un matériau conducteur ionique par ion O²⁻. Bien entendu, sans sortir du cadre de l'invention, tout autre matériau assurant ce type de conduction ou une conduction par migration d'autres ions (cations ou anions) peut être utilisé, notamment les matériaux connus pour leur conductivité protonique, tel que décrits dans le brevet US 6,878,354.

De façon jamais encore décrite dans la littérature dans ce domaine, les essais menés par le déposant ont en outre montré que l'application d'une polarisation négative selon l'invention, c'est-à-dire l'application d'une différence de potentielle négative entre la cathode et l'anode (se traduisant par l'apport d'électrons à la cathode) permettait non seulement la mise en oeuvre efficace du système électrochimique selon l'invention mais également avait pour effet l'augmentation sensible de la capacité de stockage des NOₓ du catalyseur de réduction A, et cela même en mélange pauvre, c'est-à-dire en présence de quantités substantielles d'oxygène. Une telle propriété permet au sein du filtre catalysé selon l'invention une réduction électrochimique continue des NOₓ, non seulement durant les phases de fonctionnement du moteur en mélange riche, c'est à dire durant la phase de déstockage des NOₓ, mais également de façon étonnante en mélange pauvre, une partie des NOₓ stockés étant immédiatement réduit par le catalyseur A.

Cet avantage particulier est illustré par l'exemple de réalisation qui suit :

### EXEMPLE :

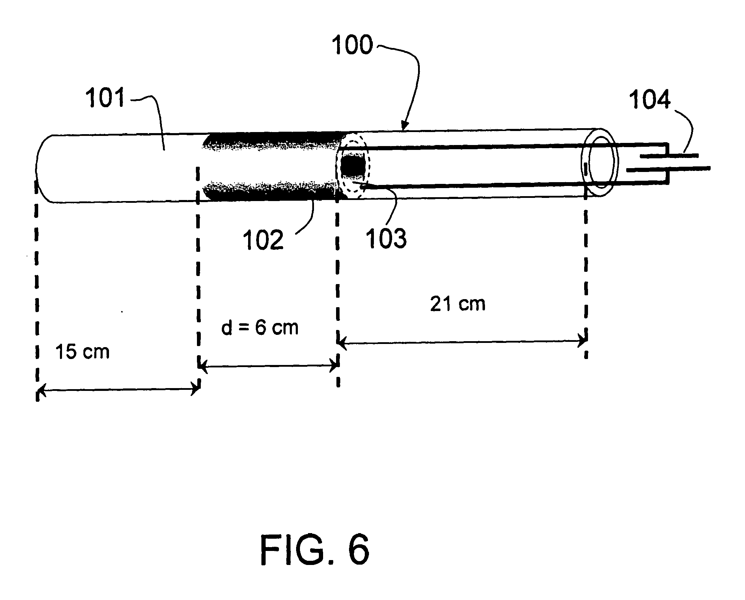

On a réalisé un système de catalyse électrochimique 100 sur la base d'un tube en zircone stabilisée à l'yttrium (ZrO₂) _{0,92} (Y₂O₃)_{0,08}, de longueur 42cm et d'épaisseur 3 mm. Le tube constitue le conducteur ionique D (conduction par ion O²⁻). Tel que représenté sur la figure 6, deux films de platine 102, 103 sont déposés à partir d'une laque de platine respectivement sur les deux faces externe et interne du tube, sur une distance d de 6 cm.
Des particules de Ba ont ensuite été déposées sur la surface du film de platine 102 déjà déposé sur la face externe du tube, à partir d'une solution d'Acétate de Baryum (CH₃CH₂O)₂Ba.
Le tube est calciné à 500 °C pendant 1 heure sous air après chaque étape de dépôt.
Les deux films de Pt 102, 103 constituent ainsi respectivement l'électrode de travail et la contre-électrode pour la face interne.
L'électrode de travail 102 est exposée sur la face externe au mélange réactionnel constitué d'un gaz comprenant du monoxyde d'azote et de l'oxygène tel que décrit dans le tableau 1 tandis que la l'électrode 103 est maintenue sous air.
Plusieurs cycles ont ainsi été effectués pour obtenir une valeur moyenne représentative de la capacité de stockage et de conversion des NOx dans un mélange riche en oxygène.
Entre chaque série de mesures, la surface du catalyseur Pt/Ba est régénérée par un balayage sous courant d'un gaz réducteur (H₂) de manière à réaliser le déstockage de la totalité des oxydes d'azote.
Selon une première mesure, les mesures sont réalisées en l'absence de polarisation, puis l'électrode de travail et la contre-électrode sont reliés selon une seconde mesure à un générateur 104 et soumises à une tension de polarisation de -4 Volts.
Les données expérimentales des mesures sont fournies dans le tableau 1. Les résultats expérimentaux des essais (dispositif polarisé ou non polarisé) sont reportés dans le tableau 2.

**Tableau 1 : données expérimentales**

| Conditions d'essai | | | |
|---|---|---|---|
| Préparation échantillon | ■ | Tube dense de YSZ (conducteur ionique) + dépôt Pt/Ba | |
| (Tube Pt/BaCO₃/YSZ) | ■ | Composition du gaz à purifier : NO / O₂ Teneurs : | |
| | | Phase de Stockage (=oxydante) : NO (1200 ppm) | |
| | | O₂ : 0,7 %, 2% et 6 % (pression de O₂) Phase de déstockage : H₂ | |
| | ■ | Débit de gaz : 4,3 1/h (le même pour les deux phases) | |
| | ■ | Température : 500 °C | |
| | ■ | Localisation des capteurs de mesure : thermocouple (Température) placé à 3 mm (environ) de la surface du catalyseur, l'analyse des gaz est effectuée sur à la sortie du réacteur par des analyseurs IR et µGC. | |
| Polarisation électrique | Mesure 1 : | | Mesure 2 : |
| | Aucune | | -Tension de polarisation = -4V [migration des ions oxydes de l'électrode de travail vers le conducteur ionique] |
| | | | -Courant limite (max) induit en phase de stockage : -0,195 mA/cm² (pour 2% et 6% de O₂) et -0, 16 mA/cm² (pour 0,7% O₂) |
| | | | -Nature des conducteurs : conducteur ionique par O²⁻ (YSZ) |

**Tableau 2 : résultats expérimentaux**

| Résultats de mesures et effets observés | Mesure 1 : Dispositif de catalyse électrochimique non polarisé | | | Mesure 2 : Dispositif de catalyse électrochimique polarisé (Tension de polarisation = -4V) | | |
|---|---|---|---|---|---|---|
| Teneur en Oxygène du gaz à traiter (NO = 1200 ppm) | 0,7% | 2 % | 6 % | 0,7% | 2 % | 6 % |
| | O₂ | O₂ | O₂ | O₂ | O₂ | O₂ |
| Teneur de NOx stockés (en µmoles, sur une période de 10 min) | 4 | 6 | 10 | 8 | 11 | 17 |
| % de NOₓ stockés | 13% | 18,5% | 34% | 27% | 33% | 54% |
| Teneur de NOₓ convertis en N₂ par voie électrochimique (exprimée en µmole) | | | | 1 | 2 | 1, 3 |
| | pas de conversion | | | | | |
| | | | | | | |
| Pourcentage de NOₓ convertis par rapport à la quantité stockée en phase de stockage | | | | 11 % | 18% | 7% |

Les résultats expérimentaux reportés dans le tableau 2 montrent non seulement une augmentation de la capacité de stockage des oxydes d'azote du système catalytique lorsque le système est polarisé (mesure 2), malgré la présence d'une quantité importante d'oxygène dans le gaz à traiter, ce qui n'avait jamais été observé jusqu'alors. On observe également une conversion par voie électrochimique des NOx en N₂ durant la phase de déstockage.

## Revendications

1. Dispositif pour la purification d'un gaz pollué, par exemple un gaz d'échappement d'un moteur diesel ou essence, comprenant en combinaison :
- une structure en nid d'abeille, comprenant au moins un matériau conducteur électronique poreux formant les parois (1) de ladite structure et un système électrochimique de traitement dudit gaz comprenant:
- une couche (7) d'un matériau D conducteur ionique et isolant électronique,
- un catalyseur A de réduction (9) des espèces polluantes du type NOₓ, au contact du conducteur ionique D, formant tout ou partie d'une électrode W ou relié électriquement à une électrode W et,
- un catalyseur B d'oxydation (4) des espèces polluantes du type suies, hydrocarbures HC, CO ou H₂, au contact du conducteur ionique D, formant tout ou partie d'une contre-électrode CE ou relié électriquement à une contre-électrode CE,
le catalyseur B étant disposé au contact du matériau conducteur électronique formant les parois du nid d'abeille et ladite couche de conducteur ionique D étant disposée entre le catalyseur A et le catalyseur B de manière à les isoler électroniquement,
- des moyens d'application d'une tension ou d'un courant entre ladite électrode W et ladite contre-électrode CE.

2. Dispositif selon la revendication 1, dans lequel le matériau conducteur électronique formant les parois (1) du nid d'abeille est un matériau inorganique poreux conducteur électronique et dans lequel le gaz à purifier traverse lesdites parois poreuses.

3. Dispositif selon la revendication 1 ou 2, dans lequel des bouchons (11, 12) obstruent à une de leur extrémité les canaux formés entre les parois des canaux (1) de la structure en nid d'abeille, de manière à délimiter alternativement des canaux d'entrée (2) et des canaux de sortie (3) pour le gaz à purifier, lesdits bouchons étant formés dans un matériau conducteur électronique et en contact électronique avec les catalyseurs A ou B, l'électrode W du système électrochimique comprenant l'ensemble des bouchons (11) disposés en entrée de la structure et la contre électrode CE du système électrochimique comprenant l'ensemble des bouchons (12) disposés en sortie de la structure.

4. Dispositif selon la revendication 2 ou 3, dans lequel le catalyseur B d'oxydation est déposé dans la porosité du matériau inorganique poreux.

5. Dispositif selon l'une des revendications précédentes, dans lequel la densité de courant appliquée entre l'électrode et la contre électrode est supérieure à 0,01 mA/cm².

6. Dispositif selon l'une des revendications précédentes, dans lequel le conducteur ionique est un conducteur ionique par ions O²⁻ ou par ions H⁺.

7. Dispositif selon la revendication 6, dans lequel le matériau D est conducteur par ion oxygène du type structure fluorite par exemple, zircone stabilisée par CaO ou par Y203, oxydes mixtes de gadolinium et cérium, ou de structure pérovskite du type gallate, composés à base de Lanthane, par exemple LaAlO₃ ou LaGaO₃ ou La₁₋ₓSrₓGa1-_{y}Mg_{y}O₃ ou de structure bimevox, par exemple Bi₂V₁₋ₓMeₓO_{z} ou de structure lamox, par exemple La₂Mo₂O₉ ou de structure apatite, par exemple Me₁₀(XO₄)₆Y₂.

8. Dispositif selon la revendication 6, dans lequel le matériau D est un conducteur protonique du type pérovskite, par exemple SrCe₁₋ₓMₓO_{3-α} où M est une terre rare, par exemple le composé SrCeₓYb₁₋ₓO_{3-α} ou du type BaCe₁₋ₓMₓO_{3-α}, par exemple le composé BaCeO₃, ou encore un composé de la famille LaₓSr₁₋ₓSCO_{3-α}, par exemple La₀,₉Sr_{0,1}SCO_{3-α}.

9. Dispositif selon l'une des revendications précédentes, dans lequel le matériau inorganique poreux comprend ou est constitué par un matériau inorganique conducteur électronique du type carbure, par exemple le SiC, ou du type siliciure, par exemple MoSi₂ ou borure, par exemple TiB₂, ou de la famille La₁₋ₓSrₓMnO₃ ou du type oxydes mixtes de gadolinium et cérium CGO.

10. Dispositif selon l'une des revendications 1 à 8, dans lequel le matériau inorganique poreux est à base de carbure de silicium SiC.

11. Dispositif selon la revendication 10, dans lequel le matériau inorganique est à base de SiC dopé, par exemple par de l'aluminium ou de l'azote, de préférence de telle façon que sa résistivité électronique soit inférieure à 20 Ohm.cm à 400°C.

12. Dispositif selon l'une des revendications précédentes, dans lequel le catalyseur A de réduction comprend au moins un métal précieux choisi parmi Pt, Pd ou Rh ou Ag ou les métaux de transition, notamment Cu, Fe, Ni, Co, et au moins un métal ou un oxyde métallique du groupe des alcalins, des alcalino-terreux, des terres rares ou des métaux de transition.

13. Dispositif selon l'une des revendications précédentes, dans lequel le catalyseur B d'oxydation comprend au moins un métal précieux choisi parmi Pt, Pd ou Rh ou les métaux de transition notamment Cu, Fe, Ni, Co.

14. Dispositif selon l'une des revendications précédentes pour la purification et la filtration d'un gaz d'échappement d'un moteur diesel, comprenant au moins et de préférence une pluralité de blocs monolithiques en nid d'abeille, le ou lesdits blocs comprenant un ensemble de conduits ou canaux adjacents d'axes parallèles entre eux séparés par des parois poreuses, obturés par des bouchons à l'une ou l'autre de leurs extrémités pour délimiter des conduits d'entrée s'ouvrant suivant une face d'admission des gaz et des conduits de sortie s'ouvrant suivant une face d'évacuation des gaz, de telle façon que le gaz traverse les parois poreuses.

15. Utilisation d'un dispositif selon l'une des revendications précédentes pour la mise en oeuvre d'un contrôle embarqué de l'activité catalytique du catalyseur, notamment pour estimer l'efficacité du catalyseur, ou dans le choix du seuil de déclenchement ou d'arrêt d'une phase de régénération dudit dispositif.

## Claims

1. A device for the purification of a polluted gas, for example an exhaust gas from a diesel or gasoline engine, comprising, in combination:
- a honeycomb structure comprising at least one porous electron-conductive material forming the walls (1) of said structure and an electrochemical system for treating said gas, comprising:
- a layer (7) of an electronically insulating and ionically conductive material D,
- a reduction catalyst A (9) for reducing the polluting species of the NOₓ type, in contact with the ion conductor D, forming all or part of an electrode W or electrically connected to an electrode W and
- an oxidation catalyst B (4) for oxidizing the polluting species of the soot, hydrocarbon HC, CO or H₂ type, in contact with the ion conductor D, forming all or part of a counterelectrode CE or electrically connected to a counterelectrode CE, the catalyst B being placed in contact with the electron-conductive material forming the walls of the honeycomb and said layer of ion conductor D being placed between the catalyst A and the catalyst B so as to electronically isolate them; and
- means for applying a voltage or a current between said electrode W and said counterelectrode CE.

2. The device as claimed in claim 1, in which the electron-conductive material forming the walls (1) of the honeycomb is a porous inorganic electron-conductive material and in which the gas to be purified flows through said porous walls.

3. The device as claimed in claim 1 or 2, in which plugs (11, 12) obstruct at one of their ends the channels formed between the walls of the channels (1) of the honeycomb structure so as to define alternately inlet channels (2) and outlet channels (3) for the gas to be purified, said plugs being formed in an electron-conductive material and being in electronic contact with the catalysts A or B, the electrode W of the electrochemical system comprising the set of plugs (11) placed at the inlet of the structure and the counterelectrode CE of the electrochemical system comprising the set of plugs (12) placed at the outlet of the structure.

4. The device as claimed in claim 2 or 3, in which the oxidation catalyst B is deposited in the pores of the porous inorganic material.

5. The device as claimed in one of the preceding claims, in which the current density applied between the electrode and the counterelectrode is greater than 0.01 mA/cm²_{.}

6. The device as claimed in one of the preceding claims, in which the ion conductor is ionically conductive by O²⁻ ions or by H⁺ ions.

7. The device as claimed in claim 6, in which the material D is oxygen-ion conductive of the fluorite structure type, for example zirconia stabilized by CaO or by Y₂O₃, or cerium gadolinium mixed oxides, or of the perovskite structure of the gallate type, compounds based on lanthanum, for example LaAlO₃ or LaGaO₃ or La₁₋ₓSrₓGa_{1-y}MgyO₃ or of the BIMEVOX structure, for example Bi₂V₁₋ₓMeₓO₂ or of the LAMOX structure, for example La₂MO₂O₉ or of the apatite structure, for example Me₁₀(XO₄)₆Y₂.

8. The device as claimed in claim 6, in which the material D is a proton conductor of the perovskite type, for example SrCe₁₋ₓMₓO_{3-α} where M is a rare earth, for example the compound SrceₓYb₁₋ₓO_{3-α} or of the BaCe₁₋ₓMₓO_{3-α} type, for example the compound BaCeO₃, or else a compound of the LaₓSr₁₋ₓScO_{3-α} family, for example La_{0.9}Sr_{0.1}ScO_{3-α}.

9. The device as claimed in one of the preceding claims, in which the porous inorganic material comprises or is formed by an inorganic electron-conductive material of the carbide type, for example Sic, or of the silicide type, for example MoSi₂, or a boride, for example TiB₂, or of the La₁₋ₓSrₓMnO₃ family or of the mixed cerium gadolinium oxide (CGO) type.

10. The device as claimed in one of claims 1 to 8, in which the porous inorganic material is based on silicon carbide SiC.

11. The device as claimed in claim 10, in which the inorganic material is based on doped SiC, for example doped by aluminum or nitrogen, preferably in such a way that its electronic resistivity is less than 20 ohms.cm at 400°C.

12. The device as claimed in one of the preceding claims, in which the reduction catalyst A comprises at least one precious metal chosen from Pt, Pd or Rh or Ag or transition metals, especially Cu, Fe, Ni, Co, and at least one metal or a metal oxide of the group comprising alkali metals, alkaline earths, rare earths or transition metals.

13. The device as claimed in one of the preceding claims, in which the oxidation catalyst B comprises at least one precious metal chosen from Pt, Pd or Rh or transition metals, especially Cu, Fe, Ni, Co.

14. The device as claimed in one of the preceding claims for the purification and filtration of an exhaust gas of a diesel engine, comprising at least and preferably a plurality of honeycomb monoliths, said monolith or monoliths comprising a set of adjacent ducts or channels of mutually parallel axes which are separated by porous walls and are closed off by plugs at one or other of their ends in order to delimit inlet ducts opening onto a gas intake face and outlet ducts opening onto a gas discharge face, in such a way that the gas flows through the porous walls.

15. The use of a device as claimed in one of the preceding claims for carrying out an on-board check of the catalytic activity of the catalyst, especially for estimating the efficiency of the catalyst, or for choosing the threshold at which a phase of regenerating said device is initiated or stopped.

## Patentansprüche

1. Vorrichtung zur Reinigung eines verunreinigten Gases, beispielsweise eines Abgases eines Diesel- oder Benzinmotors, die in Kombination umfasst:
- eine Wabenstruktur, die wenigstens ein elektronisches, poröses leitendes Material, das die Wände (1) der Struktur bildet, sowie ein elektrochemisches System zur Behandlung des Gases aufweist, welches umfasst:
- eine Schicht (7) aus einem ionischen und isolierenden elektronischen leitenden Material D,
- einen Katalysator A zur Reduktion (9) der verunreinigenden Spezies vom Typ NOₓ, in Kontakt mit dem ionischen Leiter D, der in Gänze eine Elektrode W oder einen Teil hiervon bildet oder mit einer Elektrode W elektrisch verbunden ist, und
- einen Katalysator B zur Oxidation (4) der verunreinigenden Spezies vom Typ Ruß, Kohlenwasserstoffe HC, CO oder H₂, in Kontakt mit dem ionischen Leiter D, der in Gänze eine Gegenelektrode CE oder einen Teil hiervon bildet oder mit einer Gegenelektrode CE elektrisch verbunden ist,
wobei der Katalysator B in Kontakt mit dem elektronischen leitenden Material, das die Wände der Wabe bildet, angeordnet ist und wobei die Schicht aus einem ionischen Leiter D zwischen dem Katalysator A und dem Katalysator B angeordnet ist, so dass sie diese elektronisch isoliert,
- Mittel zum Anlegen einer Spannung oder eines Stroms zwischen der Elektrode W und der Gegenelektrode CE.

2. Vorrichtung nach Anspruch 1, wobei das elektronische leitende Material, das die Wände (1) der Wabe bildet, ein anorganisches, poröses, elektronisches leitendes Material ist und wobei das zu reinigende Gas die porösen Wände durchströmt.

3. Vorrichtung nach Anspruch 1 oder 2, wobei Stopfen (11, 12) die zwischen den Wänden der Kanäle (1) der Wabenstruktur gebildeten Kanäle an einem ihrer Enden verschließen, so dass abwechselnd Eintrittskanäle (2) und Austrittskanäle (3) für das zu reinigende Gas begrenzt werden, wobei die Stopfen aus einem elektronischen leitenden Material gebildet und in elektronischem Kontakt mit den Katalysatoren A und B sind, wobei die Elektrode W des elektrochemischen Systems alle am Eingang der Struktur angeordneten Stopfen (11) umfasst und die Gegenelektrode CE des elektrochemischen Systems alle am Ausgang der Struktur angeordneten Stopfen (12) umfasst.

4. Vorrichtung nach Anspruch 2 oder 3, wobei der Oxidationskatalysator B in den Poren des anorganischen, porösen Materials abgeschieden ist.

5. Vorrichtung nach einem der vorstehenden Ansprüche, wobei die zwischen der Elektrode und der Gegenelektrode angelegte Stromdichte über 0,01 mA/cm² liegt.

6. Vorrichtung nach einem der vorstehenden Ansprüche, wobei der ionische Leiter ein durch O² - oder durch H⁺-Ionen ionischer Leiter ist.

7. Vorrichtung nach Anspruch 6, wobei das Material D leitend ist durch Sauerstoffion beispielsweise vom Typ Fluorit-Struktur, durch CaO oder durch Y2O3 stabilisiertes Zirkonoxid, Mischoxide aus Gadolinium und Cer, oder mit Perowskit-Struktur vom Typ Gallat, Verbindungen auf Lanthan-Basis, beispielsweise LaAlO₃ oder LaGaO₃ oder La₁-ₓSrₓGaLyMg_{y}O₃ oder mit Bimevox-Struktur, beispielsweise Bi₂V₁₋ₓMeₓO_{z} oder mit Lamox-Struktur, beispielsweise La₂Mo₂O₉ oder mit Apatit-Struktur, beispielsweise Me₁₀(XO₄)₆Y₂.

8. Vorrichtung nach Anspruch 6, wobei das Material D ein protonischer Leiter vom Typ Perowskit ist, beispielsweise SrCe₁₋ₓMₓO_{3-α}, worin M eine Seltene Erde ist, beispielsweise die Verbindung SrCeₓYb₁₋ₓO_{3-α}, oder vom Typ BaCe₁₋ₓMₓO_{3-α}, beispielweise die Verbindung BaCeO₃, oder aber eine Verbindung aus der Familie LaₓSr₁₋ₓScO_{3-α}, beispielsweise La_{0,9}Sr_{0,1}ScO_{3-α}.

9. Vorrichtung nach einem der vorstehenden Ansprüche, wobei das anorganische, poröse Material ein anorganisches, leitendes elektronisches Material vom Typ Carbid, beispielsweise SiC, oder vom Typ Silicid, beispielsweise MoSi₂, oder Borid, beispielsweise TiB₂, oder aus der Familie La₁₋ₓSrₓMnO₃ oder vom Typ Mischoxide aus Gadolinium und Cer CGO, umfasst oder hiervon gebildet ist.

10. Vorrichtung nach einem der Ansprüche 1 bis 8, wobei das anorganische, poröse Material auf der Basis von Siliziumkarbid SiC ist.

11. Vorrichtung nach Anspruch 10, wobei das anorganische Material auf der Basis von dotiertem SiC, beispielsweise mit Aluminium oder Stickstoff, ist, vorzugsweise derart, dass seine elektronische Resistivität weniger als 20 Ohm.cm bei 400°C beträgt.

12. Vorrichtung nach einem der vorstehenden Ansprüche, wobei der Reduktionskatalysator A wenigstens ein Edelmetall umfasst, das ausgewählt ist aus Pt, Pd oder Rh oder Ag oder den Übergangsmetallen, insbesondere Cu, Fe, Ni, Co, sowie wenigstens ein Metall oder ein Metalloxid aus der Gruppe der Alkalimetalle, der Erdalkalimetalle, der Seltenen Erden oder der Übergangsmetalle.

13. Vorrichtung nach einem der vorstehenden Ansprüche, wobei der Oxidationskatalysator B wenigstens ein Edelmetall umfasst, das ausgewählt ist aus Pt, Pd oder Rh oder den Übergangsmetallen, insbesondere Cu, Fe, Ni, Co.

14. Vorrichtung nach einem der vorstehenden Ansprüche für die Reinigung und die Filtration eines Abgases eines Dieselmotors, die wenigstens und vorzugsweise eine Vielzahl von wabenförmigen monolithischen Blöcken umfasst, wobei der oder die Blöcke eine Anordnung von einander benachbarten, durch poröse Wände getrennten Leitungen oder Kanälen mit zueinander parallelen Achsen umfassen, die an dem einen oder anderen ihrer Enden durch Stopfen verschlossen sind, um Eintrittsleitungen, die sich an einer Seite zum Einlassen der Gase öffnen, sowie Austrittsleitungen, die sich an einer Seite zum Abführen der Gase öffnen, zu begrenzen, derart, dass das Gas die porösen Wände durchströmt.

15. Verwendung einer Vorrichtung nach einem der vorstehenden Ansprüche für die Durchführung einer an Bord stattfindenden Kontrolle der katalytischen Aktivität des Katalysators, insbesondere um die Leistungsfähigkeit des Katalysators zu bewerten, oder bei der Wahl der Schwelle zum Auslösen oder Anhalten einer Regenerationsphase der Vorrichtung.
